# EUROPEAN PATENT APPLICATION

(11) **EP 4 806 941 A1**
(43) Date of publication of application: **16.09.2026**
(21) Application number: 26162926.5
(22) Date of filing: 06.03.2026
(51) Int. Cl.: C08G 77/14, C08G 77/442, C09D 183/06, C09D 183/10

(54) **NON-FLUORINATED SILANE COMPOUND, METHOD FOR PREPARING THE SAME, AND NON-FLUORINATED SILANE-BASED ORGANIC-INORGANIC HYBRID COATING COMPOSITION COMPRISING THE SAME**

(30) Priority: 10.03.2025 KR 20250030360
(71) Applicant: Gwangju Institute of Science and Technology, Gwangju 61005 (KR)
(72) Inventor: Jang, Soo Young, 61005 Buk-gu, Gwangju (KR); Kang, Hong kyu, 61005 Buk-gu, Gwangju (KR); Ahn, Yoo Kyoung, 61005 Buk-gu, Gwangju (KR); Kim, Sang Cho, 61005 Buk-gu, Gwangju (KR)
(74) Representative: Gulde & Partner

(57) **Abstract**

Disclosed are a non-fluorinated silane compound, a method for preparing the same, and a non-fluorinated silane-based organic-inorganic hybrid coating composition comprising the same. The compound represented by Formula 2 is prepared by mixing 3-[tris(trimethylsiloxy)silyl]propyl methacrylate, 3-mercaptopropyltrimethoxysilane, a radical initiator, and THF, followed by a reaction under a nitrogen atmosphere, and then concentrating and drying the organic layer under reduced pressure. Subsequently, the compound represented by Formula 2 is mixed with 2-(3,4-epoxycyclohexyl)ethyltrimethoxysilane, a catalyst, and water to undergo a reaction, yielding the compound represented by Formula 3. A coating composition comprising the compound represented by Formula 3 exhibits high visibility and excellent anti-fingerprint and anti-scratch properties.

## Description

### [Field of the Invention]

The present invention relates to a non-fluorinated silane compound, a method for preparing the same, and a non-fluorinated silane-based organic-inorganic hybrid coating composition comprising the same, and more particularly, to a non-fluorinated silane compound that exhibits high visibility and excellent anti-fingerprint and anti-scratch properties.

### [Background of the Invention]

With the development of autonomous vehicles, the importance of in-vehicle infotainment systems is being emphasized. Autonomous vehicles are equipped with various display devices, such as the central information display (CID), which play a important role in enhancing driver convenience and vehicle efficiency.

These display devices have become established as an important means of conveying visual information within vehicles, and the importance of display cover windows for protecting such devices is also increasing.

However, there is a concern regarding the possibility of shattering of glass used in cover windows of automotive display. If the glass breaks, it could pose a threat to passenger safety, and thus safety is emerging as a critical factor.

To address this concern, high-strength materials and special processing techniques are required, and it is essential to ensure the safety of passengers through such means.

Durability and functionality are critical for materials used in cover windows of automotive display. In particular, materials with excellent anti-fingerprint and anti-scratch properties are required, and the materials providing such functions play a crucial role in enhancing user convenience and maintaining the display's structure for a long time.

Currently, fluorine-based materials are widely used to impart anti-fingerprint properties to display substrates and coating compositions. However, due to the toxicity of fluorine, countries such as Europe and the United States have imposed restrictions on the use of per- and polyfluoroalkyl substances (PFASs). Accordingly, the importance of developing new, environmentally friendly, and human-safe materials that exhibit similar performance and can replace such fluorine-based materials is emerging.

Therefore, the present invention is intended to provide an innovative material that can simultaneously satisfy anti-fingerprint and anti-scratch properties, and to propose a method that can effectively address the requirements for cover windows of automobile display.

### [Summary of the Invention]

The present invention has been made in an effort to solve the above-described problems associated with prior art, and a first object of the present invention is to provide a non-fluorinated silane compound that exhibits high visibility and excellent anti-fingerprint and anti-scratch properties.

Moreover, a second object of the present invention is to provide a method for preparing a non-fluorinated silane compound for achieving the first object.

Furthermore, a third object of the present invention is to provide a non-fluorinated silane-based organic-inorganic hybrid coating composition for achieving the first object.

In order to achieve the first object, the present invention provides a non-fluorinated silane compound represented by Formula 1 below: 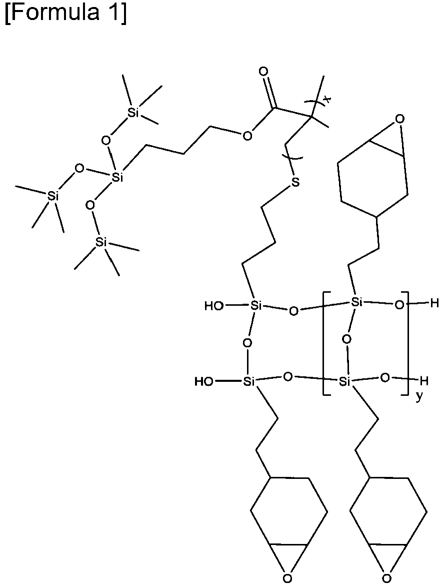 wherein x may be 1 to 10, and y may be 1 to 20.

In Formula 1, x may preferably be 1 to 5.

Moreover, in order to achieve the second object, the present invention provides a method for preparing a non-fluorinated silane compound. The method for preparing the non-fluorinated silane compound may comprise the steps of: preparing a compound represented by Formula 2 below; forming a first silane-based mixture by mixing the compound represented by Formula 2, 2-(3,4-epoxycyclohexyl)ethyltrimethoxysilane, a catalyst, and a first solvent; reacting the first silane-based mixture at a first temperature; and preparing a non-fluorinated silane compound represented by Formula 3 below: 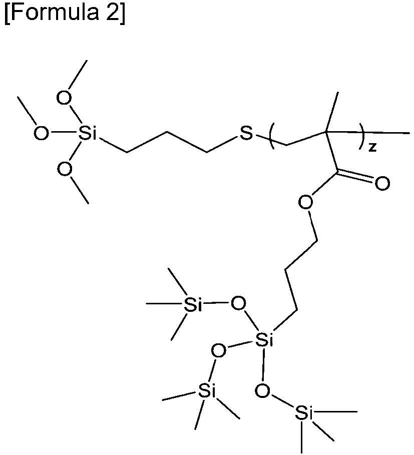 wherein z may be 1 to 10, 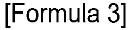 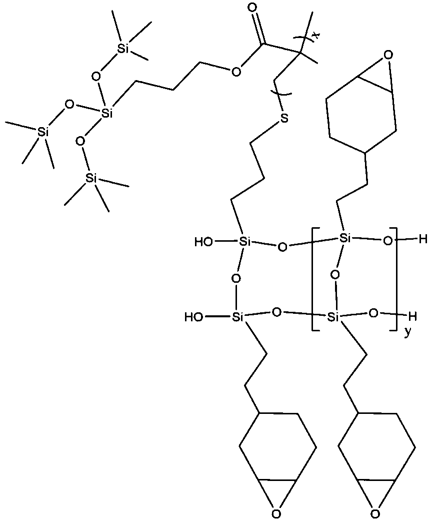 wherein x may be 1 to 10, and y may be 1 to 20.

Wherein x and z may each be from 1 to 5.

The step of preparing the compound represented by Formula 2 may comprise the steps of: forming a second silane-based mixture by mixing 3-[tris(trimethylsiloxy)silyl]propyl methacrylate, 3-mercaptopropyltrimethoxysilane, a radical initiator, and a second solvent; reacting the second silane-based mixture at a second temperature under a nitrogen atmosphere; cooling the second silane-based mixture reacted under the nitrogen atmosphere to room temperature; collecting the second silane-based mixture cooled to room temperature as an organic layer and subjecting the same to reduced pressure; and drying the second silane-based mixture subjected to reduced pressure.

The radical initiator may be 2,2'-azobisisobutyronitrile (AIBN).

The second solvent may be tetrahydrofuran (THF).

The second temperature may range from 50 °C to 120 °C.

The first solvent may be water.

The catalyst may be ammonium hydroxide.

The first temperature may range from 20 °C to 80 °C.

Furthermore, in order to achieve the third object, the present invention provides a non-fluorinated silane-based organic-inorganic hybrid coating composition comprising a non-fluorinated silane compound represented by Formula 4 below, a photoinitiator, and a third solvent: 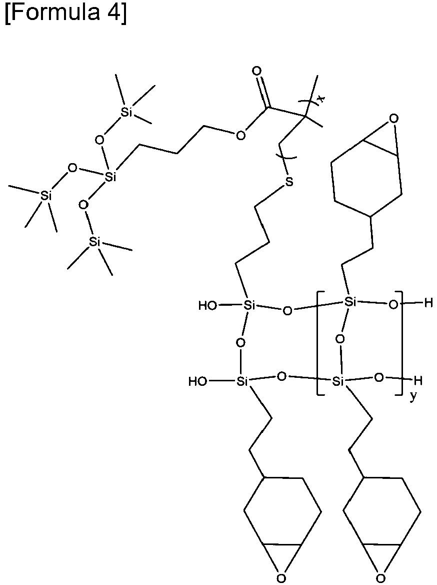 wherein x may be 1 to 10, and y may be 1 to 20.

In Formula 4, x may preferably be 1 to 5.

The photoinitiator may be triarylsulfonium hexafluoroantimonate (TSHFA).

The third solvent may be methyl ethyl ketone.

The coating film formed on the substrate by curing the composition may have a contact angle of 90° or more.

According to the present invention, a non-fluorinated silane compound, a method for preparing the same, and a coating composition comprising the same are provided.

Therefore, it is possible to provide cover windows of automotive display that exhibits high visibility and excellent anti-fingerprint and anti-scratch properties without using fluorinated compounds.

### [Brief Description of the Drawings]

FIG. 1 is a reaction scheme illustrating the synthesis process of a compound represented by Formula 1 according to an embodiment of the present invention.
FIG. 2 is ¹H NMR analysis diagram of a compound represented by Formula 2 prepared according to an embodiment of the present invention.
FIG. 3 is MALDI-TOF-MS analysis plot of a compound represented by Formula 2 prepared according to an embodiment of the present invention.
FIG. 4 is FT-IR analysis graph of a compound represented by Formula 1 prepared according to an embodiment of the present invention.

### [Detailed Description]

Hereinafter, preferred embodiments of the present invention will be described in more detail with reference to the accompanying drawings in order to provide a more specific description of the invention. However, the present invention is not limited to the embodiments described herein and may be embodied in other forms.

Throughout this specification, when a part is referred to as "including" a certain component, it is to be understood that, unless explicitly stated otherwise, the part may further include other components and does not exclude the presence of other components.

It will be understood that, when an element such as a layer, region, or substrate is referred to as being "on" another element, the element may be directly on the other element or may have one or more intervening elements therebetween.

It will be understood that, although the terms "first", "second", and the like may be used herein to describe various elements, components, regions, layers, and/or sections, such elements, components, regions, layers, and/or sections should not be limited by these terms.

Hereinafter, Examples of the present invention will be described in more detail with reference to the accompanying drawings.

The present invention provides a method for preparing a non-fluorinated silane compound.

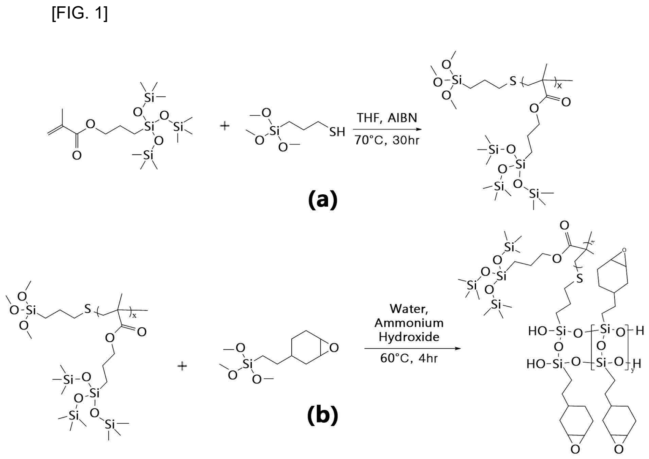

FIG. 1 is a reaction scheme illustrating the synthesis process of a compound represented by Formula 1 according to an embodiment of the present invention.

Referring to FIG. 1, the synthesis process of the compound represented by Formula 1 below will be described: 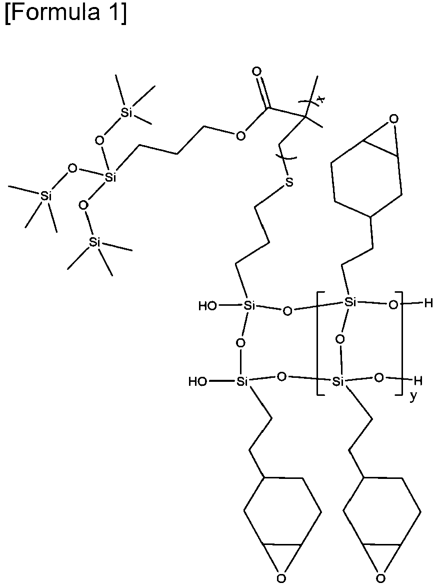 wherein x may be 1 to 10, and y may be 1 to 20.

In Formula 1, x may preferably be 1 to 5.

The method for preparing the non-fluorinated silane compound may comprise the steps of: preparing a compound represented by Formula 2 below; forming a first silane-based mixture by mixing the compound represented by Formula 2, 2-(3,4-epoxycyclohexyl)ethyltrimethoxysilane, a catalyst, and a first solvent; reacting the first silane-based mixture at a first temperature; and preparing a non-fluorinated silane compound represented by Formula 1. 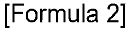 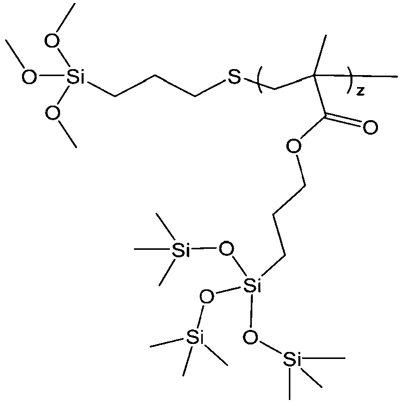 wherein z may be 1 to 10.

In Formula 2, z may preferably be 1 to 5.

The step of preparing a compound represented by Formula 2 may comprise the steps of: forming a second silane-based mixture by mixing 3-[tris(trimethylsiloxy)silyl]propyl methacrylate, 3-mercaptopropyltrimethoxysilane, a radical initiator, and a second solvent; reacting the second silane-based mixture at a second temperature under a nitrogen atmosphere; cooling the second silane-based mixture reacted under the nitrogen atmosphere to room temperature; collecting the second silane-based mixture cooled to room temperature as an organic layer and subjecting the same to reduced pressure; and drying the second silane-based mixture subjected to reduced pressure.

Referring to FIG. 1(a), the synthesis process of the compound represented by Formula 2 will be described.

3-[tris(trimethylsiloxy)silyl]propyl methacrylate, 3-mercaptopropyltrimethoxysilane, a radical initiator, and a second solvent may be mixed to form a second silane-based mixture.

The compound represented by Formula 2 may be polymerized by a free radical copolymerization method. The radical initiator is a polymerization initiator that forms free radicals upon decomposition, and the free radicals are generated by using a compound such as radical initiator that can be activated chemically, thermally, or photochemically.

Suitable radical initiator may include organic azo compounds, organic peroxides, or inorganic peroxides.

The organic azo compounds may include 2,2'-azobisisobutyronitrile, 2,2'-azobis(2-methylbutyronitrile), or 1,1'-azobis(1-cyclohexanecarbonitrile).

The organic peroxides may include tert-butylperoxy-2-ethylhexanoate, tert-butyl peroxypivalate, acetyl peroxide, benzoyl peroxide, lauroyl peroxide, caproyl peroxide, or tert-butyl hydroperoxide.

The inorganic peroxides may include ammonium peroxodisulfate, sodium peroxodisulfate, or potassium peroxodisulfate.

Preferably, the radical initiator may be an azo compound, and more preferably, 2,2'-azobisisobutyronitrile (AIBN).

The radical initiator may be used in an amount of 0.01 wt% to 5 wt%, and preferably in an amount of 0.1 wt% to 3 wt%, based on 3-[tris(trimethylsiloxy)silyl]propyl methacrylate.

The radical polymerization reaction may be performed in a vessel purged with an inert gas. The inert gas may include nitrogen, argon, or helium. Preferably, the inert gas may be selected from argon and nitrogen, and more preferably, the inert gas may be nitrogen.

As the second solvent, an organic solvent or an aqueous solvent commonly used in radical polymerization may be used.

The organic solvent may include benzene, toluene, N,N-dimethylformamide (DMF), dimethyl sulfoxide (DMSO), acetone, methyl ethyl ketone, dioxane, hexafluoroisopropanol, chloroform, carbon tetrachloride, tetrahydrofuran (THF), ethyl acetate, or trifluoromethylbenzene.

The aqueous solvent may include water, methanol, ethanol, isopropanol, n-butanol, ethyl cellosolve, butyl cellosolve, 1-methoxy-2-propanol, or diacetone alcohol. Preferably, the second solvent is THF.

The second solvent may be used in an amount of 0.01 ml to 10 ml, preferably 0.05 ml to 5 ml, and more preferably 0.1 ml to 1 ml, relative to 1 g of 3-[tris(trimethylsiloxy)silyl]propyl methacrylate.

The second temperature (polymerization temperature) may be in the range of 20 °C to 180 °C, preferably 40 °C to 130 °C, and more preferably 50 °C to 120 °C.

Specifically, AIBN produces two free radicals upon heating, and the produced free radicals react with the double bond of 3-[tris(trimethylsiloxy)silyl]propyl methacrylate, thereby initiating radical polymerization.

The mercapto group (-SH) of 3-mercaptopropyltrimethoxysilane also reacts with free radicals to generate radicals, and a polymer is formed as radical reactions with the double bond of the methacrylate occur repeatedly.

Thereafter, the reaction is terminated, and the organic layer is concentrated under reduced pressure to obtain the compound represented by Formula 2.

FIG. 1(b) is a reaction scheme illustrating the synthesis process of a compound represented by Formula 1 according to an embodiment of the present invention.

Referring to FIG. 1(b), the synthesis process of the compound represented by Formula 1 will be described.

Specifically, the compound represented by Formula 2 and 2-(3,4-epoxycyclohexyl)ethyltrimethoxysilane (ECTMS) may be hydrolyzed and condensed by a sol-gel method.

The hydrolysis and condensation reactions may be performed in an aqueous or aqueous/organic solvent in the presence of an acidic or basic condensation catalyst.

The condensation catalyst may include a metal chelate compound, an organic acid, an inorganic acid, an organic base, or an inorganic base.

The metal chelate compound as the condensation catalyst may include titanium chelate compounds such as triethoxy-mono(acetylacetonato)titanium and tri-n-propoxy-mono(acetylacetonato)titanium; zirconium chelate compounds such as triethoxy-mono(acetylacetonato)zirconium and tri-n-propoxy-mono(acetylacetonato)zirconium; or aluminum chelate compounds such as tris(acetylacetonato)aluminum and tris(ethylacetoacetate)aluminum.

The organic acid as the condensation catalyst may include acetic acid, propionic acid, butanoic acid, pentanoic acid, hexanoic acid, heptanoic acid, octanoic acid, nonanoic acid, decanoic acid, oxalic acid, maleic acid, methylmalonic acid, adipic acid, sebacic acid, gallic acid, butyric acid, mellitic acid, or arachidonic acid.

The inorganic acid as the condensation catalyst may include hydrochloric acid, nitric acid, sulfuric acid, hydrofluoric acid, or phosphoric acid.

The organic base as the condensation catalyst may include pyridine, pyrrole, piperazine, pyrrolidine, piperidine, picoline, trimethylamine, triethylamine, monoethanolamine, diethanolamine, dimethylmonoethanolamine, or tetramethylammonium hydroxide.

The inorganic base as the condensation catalyst may include ammonium hydroxide (ammonia), sodium hydroxide, potassium hydroxide, barium hydroxide, or calcium hydroxide. Preferably, the condensation catalyst is ammonium hydroxide (ammonia).

First, the methoxy groups of the compound represented by Formula 2 may be hydrolyzed and condensed by ammonium hydroxide.

In addition, the methoxy groups of 2-(3,4-epoxycyclohexyl)ethyltrimethoxysilane may also be hydrolyzed and condensed by ammonium hydroxide.

The hydrolyzed and condensed compounds may react to form a ladder-like structure with a high molecular weight.

Here, the first temperature, i.e., the reaction temperature at which the hydrolysis and condensation proceed, may be typically between 20 °C and 80 °C.

The content of the condensation catalyst may be about 0.00001 mol to 1 mol relative to about 1 mol of 2-(3,4-epoxycyclohexyl)ethyltrimethoxysilane, but is not limited thereto.

The first solvent may preferably be water or alcohol.

The content of the first solvent may be 1 mol to 2 mol relative to 1 mol of the mixture, but is not limited thereto.

The present invention also provides a non-fluorinated silane-based organic-inorganic hybrid coating composition.

The non-fluorinated silane-based organic-inorganic hybrid coating composition may comprise a non-fluorinated silane compound represented by Formula 3, a photoinitiator, and a third solvent: 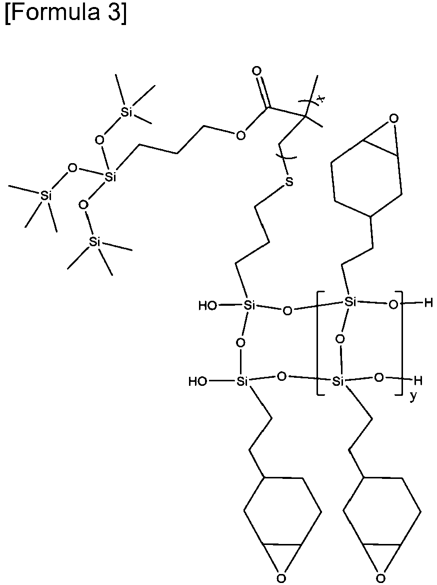 wherein x may be 1 to 10, and y may be 1 to 20.

In Formula 3, x may preferably be 1 to 5.

The photoinitiator is preferably triarylsulfonium hexafluorophosphate, triarylsulfonium hexafluoroantimonate, or arylsulfonium hexafluorophosphate, and more preferably triarylsulfonium hexafluoroantimonate.

The coating composition preferably comprises 1 wt% to 10 wt% of the photoinitiator, and more preferably, 1 wt% to 5 wt%.

The third solvent, which is included to adjust the workability of the coating composition may be an organic solvent, and preferably methyl ethyl ketone.

Next, preferred Preparation Examples and Measurement Examples are presented to facilitate understanding of the present invention. However, the following Preparation Examples and Measurement Examples are provided only to facilitate the understanding of the present invention, and the present invention is not limited by the following Measurement Examples.

### Preparation Example 1: Preparation of Compound Represented by Formula 2

5.53 ml of 3-[tris(trimethylsiloxy)silyl]propyl methacrylate, 0.56 ml of 3-mercaptopropyltrimethoxysilane, 0.069 g of AIBN, and 4.5 ml of THF were introduced into a reaction vessel. The mixture was heated to 70 °C under an N₂ atmosphere for the reaction. The reaction was performed for 30 hours, and then the mixture was cooled to room temperature. The cooled mixture was separated into an organic layer, and the solvent was removed under reduced pressure. Subsequently, the resultant was dried in a vacuum oven at room temperature for 24 hours to prepare the compound represented by Formula 2.

### Preparation Example 2: Preparation of Substrate Coated with Coating Composition Comprising Compound Represented by Formula 1

### Preparation of Compound Represented by Formula 1

0.0024 g of the compound represented by Formula 2, 1.2296 g of 2-(3,4-epoxycyclohexyl)ethyltrimethoxysilane (ECTMS), 30 µl of ammonium hydroxide, and 0.135 g of water were introduced into a reaction vessel.

The mixture reacted in an oil bath at 60 °C for 4 hours. Subsequently, the mixture was cooled to room temperature to produce the compound represented by Formula 1.

### Preparation of Coating Composition

0.6 g of methyl ethyl ketone (MEK) and 0.048 g of triarylsulfonium hexafluoroantimonate (TSHFA) as a photoinitiator were added to 1.2 g of the compound represented by Formula 1, and the mixture was stirred at room temperature for 1 hour to prepare a coating composition.

### Preparation of Coated PET Substrate

The coating composition was spin-coated onto a UV-treated PET substrate. The coated PET substrate was heat-treated at 80 °C for 2 hours, followed by UV curing for 2 minutes and moisture annealing (85 °C/85% RH) in an 8585 chamber to cure the composition. Subsequently, the resultant was kept under an N₂ atmosphere for one day for stabilization.

### Preparation of Coated PC Substrate

A multifunctional primer (MFP) was coated onto a UV-treated PC substrate using a spin coater, followed by pre-annealing at 80 °C for 2 hours and UV curing for 2 minutes to cure the primer.

The coating composition was spin-coated, followed by pre-annealing at 80 °C for 2 hours, UV curing for 2 minutes, and moisture annealing (85 °C/85% RH) in an 8585 chamber to cure the composition. Subsequently, the resultant was kept under an N₂ atmosphere for one day for stabilization.

### Preparation Example 3

### Preparation of Compound Represented by Formula 1

The compound represented by Formula 1 was prepared in the same manner as in Preparation Example 2, except that 0.0049 g of the compound represented by Formula 2 and 1.2271 g of 2-(3,4-epoxycyclohexyl)ethyltrimethoxysilane were introduced.

### Preparation of Coating Composition

The prepared compound represented by Formula 1 was introduced, and the procedure was performed in the same manner as in Preparation Example 2 to prepare a coating composition.

### Preparation of Coated PET Substrate

A coated PET substrate was prepared in the same manner as in Preparation Example 2 using the prepared coating composition.

### Preparation of Coated PC Substrate

A coated PC substrate was prepared in the same manner as in Preparation Example 2 using the prepared coating composition.

### Preparation Example 4

### Preparation of Compound Represented by Formula 1

The compound represented by Formula 1 was prepared in the same manner as in Preparation Example 2, except that 0.0074 g of the compound represented by Formula 2 and 1.2246 g of 2-(3,4-epoxycyclohexyl)ethyltrimethoxysilane were introduced.

### Preparation of Coating Composition

The prepared compound represented by Formula 1 was introduced, and the procedure was performed in the same manner as in Preparation Example 2 to prepare a coating composition.

### Preparation of Coated PET Substrate

A coated PET substrate was prepared in the same manner as in Preparation Example 2 using the prepared coating composition.

### Preparation of Coated PC Substrate

A coated PC substrate was prepared in the same manner as in Preparation Example 2 using the prepared coating composition.

### Preparation Example 5

### Preparation of Compound Represented by Formula 1

The compound represented by Formula 1 was prepared in the same manner as in Preparation Example 2, except that 0.0099 g of the compound represented by Formula 2 and 1.2221 g of 2-(3,4-epoxycyclohexyl)ethyltrimethoxysilane were introduced.

### Preparation of Coating Composition

The prepared compound represented by Formula 1 was introduced, and the procedure was performed in the same manner as in Preparation Example 2 to prepare a coating composition.

### Preparation of Coated PET Substrate

A coated PET substrate was prepared in the same manner as in Preparation Example 2 using the prepared coating composition.

### Preparation of Coated PC Substrate

A coated PC substrate was prepared in the same manner as in Preparation Example 2 using the prepared coating composition.

### Preparation Example 6

### Preparation of Compound Represented by Formula 1

The compound represented by Formula 1 was prepared in the same manner as in Preparation Example 2, except that 0.0123 g of the compound represented by Formula 2 and 1.2197 g of 2-(3,4-epoxycyclohexyl)ethyltrimethoxysilane were introduced.

### Preparation of Coating Composition

The prepared compound represented by Formula 1 was introduced, and the procedure was performed in the same manner as in Preparation Example 2 to prepare a coating composition.

### Preparation of Coated PET Substrate

A coated PET substrate was prepared in the same manner as in Preparation Example 2 using the prepared coating composition.

### Preparation of Coated PC Substrate

A coated PC substrate was prepared in the same manner as in Preparation Example 2 using the prepared coating composition.

### Preparation Example 7

### Preparation of Compound Represented by Formula 1

The compound represented by Formula 1 was prepared in the same manner as in Preparation Example 2, except that 0.0185 g of the compound represented by Formula 2 and 1.2135 g of 2-(3,4-epoxycyclohexyl)ethyltrimethoxysilane were introduced.

### Preparation of Coating Composition

The prepared compound represented by Formula 1 was introduced, and the procedure was performed in the same manner as in Preparation Example 2 to prepare a coating composition.

### Preparation of Coated PET Substrate

A coated PET substrate was prepared in the same manner as in Preparation Example 2 using the prepared coating composition.

### Preparation of Coated PC Substrate

A coated PC substrate was prepared in the same manner as in Preparation Example 2 using the prepared coating composition.

### Preparation Example 8

### Preparation of Compound Represented by Formula 1

The compound represented by Formula 1 was prepared in the same manner as in Preparation Example 2, except that 0.0246 g of the compound represented by Formula 2 and 1.2074 g of 2-(3,4-epoxycyclohexyl)ethyltrimethoxysilane were introduced.

### Preparation of Coating Composition

The prepared compound represented by Formula 1 was introduced, and the procedure was performed in the same manner as in Preparation Example 2 to prepare a coating composition.

### Preparation of Coated PET Substrate

A coated PET substrate was prepared in the same manner as in Preparation Example 2 using the prepared coating composition.

### Preparation of Coated PC Substrate

A coated PC substrate was prepared in the same manner as in Preparation Example 2 using the prepared coating composition.

The mixing ratios of the compound represented by Formula 2 and 2-(3,4-epoxycyclohexyl)ethyltrimethoxysilane (ECTMS) used during the preparation of the compound represented by Formula 1 are summarized in Table 1 below.

**[Table 1]**

| | Compound of Formula 1 (wt%) | Compound of Formula 2 (g) | ECTMS (g) |
|---|---|---|---|
| Preparation Example 2 | 0.2 | 0.0024 | 1.2296 |
| Preparation Example 3 | 0.4 | 0.0049 | 1.2271 |
| Preparation Example 4 | 0.6 | 0.0074 | 1.2246 |
| Preparation Example 5 | 0.8 | 0.0099 | 1.2221 |
| Preparation Example 6 | 1 | 0.0123 | 1.2197 |
| Preparation Example 7 | 1.5 | 0.0185 | 1.2135 |
| Preparation Example 8 | 2 | 0.0246 | 1.2074 |

### Comparative Example 1: Bare PET Substrate

A bare PET substrate was prepared.

### Comparative Example 2: Preparation of Substrate Coated with Coating Composition Comprising CEOS

### Preparation of Coating Composition

The following cycloaliphatic epoxy oligosiloxane (CEOS) was prepared.

1 g of CEOS, 0.6 g of methyl ethyl ketone (MEK), and 0.048 g of triarylsulfonium hexafluoroantimonate (TSHFA) as a photoinitiator were introduced, and the mixture was stirred at room temperature for 1 hour to prepare a coating composition.

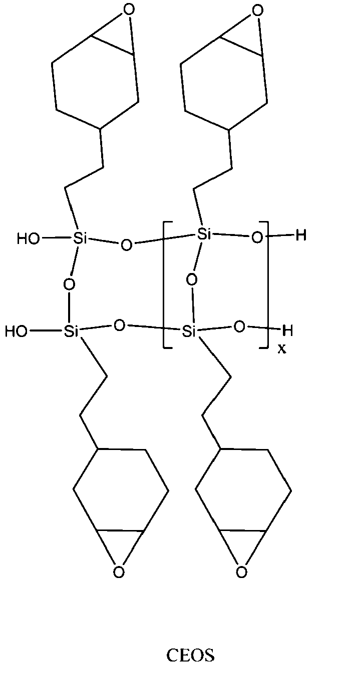

### Preparation of Coated PC Substrate

A coated PC substrate was prepared in the same manner as in Preparation Example 2 using the prepared coating composition.

### Comparative Example 3

### Preparation of Coating Composition

2 mg of 3-[tris(trimethylsiloxy)silyl]propyl methacrylate, 1 g of CEOS of Comparative Example 2, 0.6 g of methyl ethyl ketone (MEK), and 0.048 g of triarylsulfonium hexafluoroantimonate (TSHFA) as a photoinitiator were introduced, and the mixture was stirred at room temperature for 1 hour to prepare a coating composition.

### Preparation of Coated PC Substrate

A coated PC substrate was prepared in the same manner as in Preparation Example 2 using the prepared coating composition.

### Comparative Example 4

### Preparation of Coating Composition

A coating composition was prepared in the same manner as in Comparative Example 3, except that 4 mg of 3-[tris(trimethylsiloxy)silyl]propyl methacrylate was introduced.

### Preparation of Coated PC Substrate

A coated PC substrate was prepared in the same manner as in Preparation Example 2 using the prepared coating composition.

### Comparative Example 5

### Preparation of Coating Composition

A coating composition was prepared in the same manner as in Comparative Example 3, except that 6 mg of 3-[tris(trimethylsiloxy)silyl]propyl methacrylate was introduced.

### Preparation of Coated PC Substrate

A coated PC substrate was prepared in the same manner as in Preparation Example 2 using the prepared coating composition.

### Comparative Example 6

### Preparation of Coating Composition

A coating composition was prepared in the same manner as in Comparative Example 3, except that 8 mg of 3-[tris(trimethylsiloxy)silyl]propyl methacrylate was introduced.

### Preparation of Coated PC Substrate

A coated PC substrate was prepared in the same manner as in Preparation Example 2 using the prepared coating composition.

### Comparative Example 7

### Preparation of Coating Composition

A coating composition was prepared in the same manner as in Comparative Example 3, except that 10 mg of 3-[tris(trimethylsiloxy)silyl]propyl methacrylate was introduced.

### Preparation of Coated PC Substrate

A coated PC substrate was prepared in the same manner as in Preparation Example 2 using the prepared coating composition.

### Comparative Example 8

### Preparation of Coating Composition

A coating composition was prepared in the same manner as in Comparative Example 3, except that 15 mg of 3-[tris(trimethylsiloxy)silyl]propyl methacrylate was introduced.

### Preparation of Coated PC Substrate

A coated PC substrate was prepared in the same manner as in Preparation Example 2 using the prepared coating composition.

### Comparative Example 9

### Preparation of Coating Composition

A coating composition was prepared in the same manner as in Comparative Example 3, except that 20 mg of 3-[tris(trimethylsiloxy)silyl]propyl methacrylate was introduced.

### Preparation of Coated PC Substrate

A coated PC substrate was prepared in the same manner as in Preparation Example 2 using the prepared coating composition.

The mixing ratios of 3-[tris(trimethylsiloxy)silyl]propyl methacrylate and CEOS used during the preparation of the coating compositions according to Comparative Examples 3 to 9 are summarized in Table 2 below.

**[Table 2]**

| | 3-[tris(trimethylsiloxy)silyl]propyl methacrylate (mg) | CEOS (g) |
|---|---|---|
| Comparative Example 3 | 2 | 1 |
| Comparative Example 4 | 4 | 1 |
| Comparative Example 5 | 6 | 1 |
| Comparative Example 6 | 8 | 1 |
| Comparative Example 7 | 10 | 1 |
| Comparative Example 8 | 15 | 1 |
| Comparative Example 9 | 20 | 1 |

### Measurement Example 1: Structural Analysis of Compound Represented by Formula 2

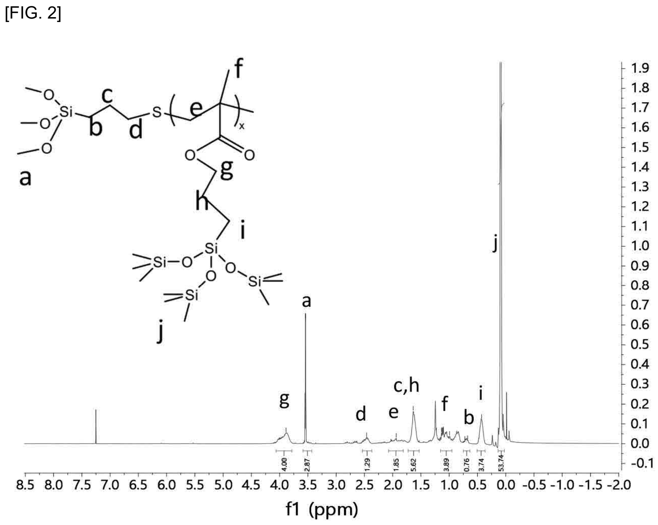

FIG. 2 is ¹H NMR analysis diagram of a compound represented by Formula 2 prepared according to an embodiment of the present invention.

JNM-ECX400 was used as an equipment for the ¹H nuclear magnetic resonance (¹H NMR) spectroscopic analysis.

Referring to Fig. 2, in the ¹H NMR spectroscopic analysis, peaks of 3-[tris(trimethylsiloxy)silyl]propyl methacrylate were observed at chemical shifts of 3.88, 2.03, 1.62, 1.12, 0.42, and 0.08 ppm, and peaks of 3-mercaptopropyltrimethoxysilane were observed at 3.55, 2.46, 1.62, and 0.71 ppm. The absence of peaks at 6.16 and 5.53 ppm indicates that the double bond of the methyl methacrylate reacted with the mercapto group, confirming the successful formation of the target compound.

The peaks are clearly split according to the integration values in the ¹H NMR spectrum (400 MHz).

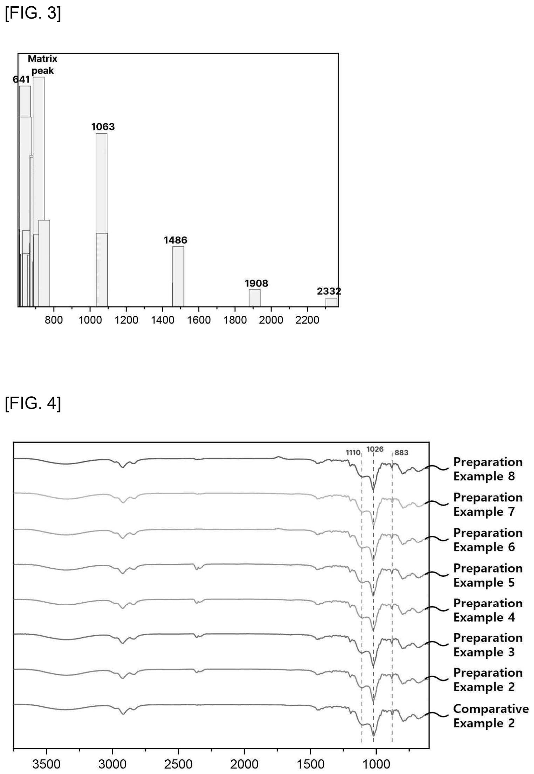

FIG. 3 is MALDI-TOF-MS analysis plot of a compound represented by Formula 2, prepared according to an embodiment of the present invention.

MALDI-TOF-MS was measured using Autoflex speed in a positive ion mode with 2,5-dihydroxybenzoic acid as a matrix.

Referring to FIG. 3, peaks were observed at 641, 1063, 1486, 1908, and 2332 with intervals of approximately 423, indicating that the number of repeating units (x) of the 3-[tris(trimethylsiloxy)silyl]propyl methacrylate polymer ranges from 1 to 5.

### Measurement Example 2: Structural Analysis of Compound Represented by Formula 1

FIG. 4 is FT-IR analysis graph of a compound represented by Formula 1 prepared according to an embodiment of the present invention.

The FT-IR spectra were obtained using a Vertex 70v spectrometer.

Referring to Fig. 4, similar to the CEOS of Comparative Example 2, peaks at 1026 and 1110 cm⁻¹, corresponding to a Si-O-Si structure were observed in Preparation Examples 2 to 8, confirming the formation of a ladder-type silsesquioxane.

### Measurement Example 3: Physical Properties of Coated PET substrates

The physical properties of the PET substrates coated with coating compositions of Comparative Examples 1 and 2 and Preparation Examples 2 to 8 are summarized in Table 3 below.

The transmittance was measured using a Cary 5000 UV/Vis/NIR absorption spectrophotometer, the contact angle was measured using a Phoenix-300 Touch, and the pencil hardness was measured using an Elcometer 501.

In Table 3 below, the transmittance (%) refers to the transmittance in the visible light region (380 nm to 780 nm), and the values in parentheses represent the transmittance at 550 nm.

**[Table 3]**

| | Transmittance (%) | Contact angle (°) | Pencil hardness |
|---|---|---|---|
| Comparative Example 1 | 88.5258 (88.51909) | 51.12 | < H |
| Comparative Example 2 | 88.61021 (88.68071) | 73.07 | 8H |
| Preparation Example 2 | 89.33676 (89.553389) | 89.69 | 8H |
| Preparation Example 3 | 89.16234 (89.37958) | 92.48 | 8H |
| Preparation Example 4 | 89.44167 (89.47752) | 102.26 | 8H |
| Preparation Example 5 | 89.55476 (89.69646) | 107.38 | 8H |
| Preparation Example 6 | 89.55825 (89.70983) | 104.47 | 8H |
| Preparation Example 7 | 89.86041 (90.01112) | 96.95 | 7H |
| Preparation Example 8 | 90.0182 (90.29303) | 93.94 | 5H |

As shown in Table 3, the PET substrates coated with the coating compositions of the Preparation Examples 2 to 8 exhibited higher transmittance than those of the Comparative Examples, and in particular, showed further improved transmittance at 550 nm.

Specifically, these results show that the transmittance also improves as the concentration of the compounds represented by Formulas 1 and 2 increases.

Referring to the contact angles, the PET substrates coated with the coating compositions of the Preparation Examples 2 to 8 exhibited significantly higher contact angles than those of the Comparative Examples. The contact angle of the PET substrate before forming the coating layer in Comparative Example 1 was 51.12°, and the contact angle of the PET substrate coated with the coating composition including only CEOS, which is a ladder-type silsesquioxane, without the compound represented by Formula 1 in Comparative Example 2 was 73.07°.

On the other hand, the contact angles of the PET substrates coated with the coating compositions including the compound represented by Formula 1 in Preparation Examples 2 to 8 were approximately 90°, exhibiting high hydrophobicity.

Referring to the pencil hardness, the pencil hardness of the PET substrate before forming the coating layer in Comparative Example 1 was less than H, indicating very low surface hardness; however, the pencil hardness of the PET substrate coated with the coating composition including only CEOS, which is a ladder-type silsesquioxane, without the compound represented by Formula 1 in Comparative Example 2 was 8H. The pencil hardness values of the PET substrates, which are coated with the coating compositions including the compound represented by Formula 1 in Preparation Examples 2 to 8, have range of 5H to 8H.

That is, since the compound represented by Formula 1 also includes the CEOS structure, which is a ladder-type silsesquioxane, the CEOS structure has a significant influence on anti-scratch properties.

In particular, the PET substrate coated with the coating composition including the compound represented by Formula 1 in Preparation Example 5 exhibits a transmittance of 89% or more, a maximum contact angle of 107.38°, and excellent hardness with a pencil hardness of 8H or more, thereby providing high visibility and excellent anti-fingerprint and anti-scratch properties.

### Measurement Example 4: Physical Properties of Coated PC Substrates

The physical properties of the PC substrates coated with the coating compositions of Comparative Examples 1 and 2 and Preparation Examples 2 to 8 are summarized in Table 4 below.

In Table 4 below, the transmittance (%) refers to the transmittance in the visible light region (380 nm to 780 nm), and the values in parentheses represent the transmittance at 550 nm.

**[Table 4]**

| | Transmittance (%) | Contact angle (°) | Pencil hardness |
|---|---|---|---|
| Comparative Example 1 | 89.99 (90.08) | 80.17 | 6B |
| Comparative Example 2 | 90.33 (90.42) | 69.95 | 7H |
| Preparation Example 2 | 90.56 (90.68) | 86.74 | 7H |
| Preparation Example 3 | 90.63 (90.71) | 90.62 | 7H |
| Preparation Example 4 | 90.71 (90.75) | 95.20 | 7H |
| Preparation Example 5 | 90.88 (90.93) | 101.15 | 7H |
| Preparation Example 6 | 90.89 (90.97) | 96.65 | 7H |
| Preparation Example 7 | 90.90 (90.94) | 93.69 | 5H |
| Preparation Example 8 | 91.13 (91.17) | 92.9 | 4H |

As shown in Table 4, the PC substrates coated with the coating compositions of the Preparation Examples 2 to 8 exhibited higher transmittance than those of the Comparative Examples, and in particular, showed further improved transmittance at 550 nm.

Specifically, these results show that the transmittance also improves as the concentration of the compounds represented by Formulas 1 and 2 increases.

Referring to the contact angle, the PC substrates coated with the compounds according to Preparation Examples 2 to 8 exhibited significantly higher contact angles than the Comparative Examples. The contact angle of the PC substrate before forming the coating film of Comparative Example 1 was 80.17°, and the contact angle of the PC substrate coated with the coating composition including only CEOS, which is a ladder-type silsesquioxane, without the compound represented by Formula 1 in Comparative Example 2 was 69.95°.

On the other hand, the contact angles of the PC substrates coated with the coating compositions including the compound represented by Formula 1 in Preparation Examples 2 to 8 were approximately 90°, exhibiting high hydrophobicity.

Referring to the pencil hardness, the pencil hardness of the PC substrate before forming the coating film in Comparative Example 1 was 6B, indicating very low surface hardness; however, the pencil hardness of the PC substrate coated with the coating composition including only CEOS, which is a ladder-type silsesquioxane, without the compound represented by Formula 1 in Comparative Example 2 was 7H. The pencil hardness values of the PC substrates coated with the coating compositions including the compound represented by Formula 1 in Preparation Examples 2 to 8 ranged from 4H to 7H.

That is, since the compound represented by Formula 1 also includes the CEOS structure, which is a ladder-type silsesquioxane, the CEOS structure has a significant influence on anti-scratch properties.

In particular, the PC substrate coated with the coating composition including the compound represented by Formula 1 in Preparation Example 5 exhibits a transmittance of 90% or more, a maximum contact angle of 101.15°, and excellent hardness with a pencil hardness of 7H or more, thereby providing high visibility and excellent anti-fingerprint and anti-scratch properties.

### Comparative Measurement Example 1: Physical Properties of PC Substrates

The physical properties of the PC substrates coated with the coating compositions of the Comparative Examples are summarized in Table 5 below.

The transmittance (%) refers to the transmittance in the visible light region (380 nm to 780 nm), and the values in parentheses represent the transmittance at 550 nm.

**[Table 5]**

| | Transmittance (%) | Contact angle (°) | Pencil hardness |
|---|---|---|---|
| Comparative Example 2 | 90.33 (90.42) | 69.95 | 7H |
| Comparative Example 3 | 90.35 (90.43) | 72.17 | 7H |
| Comparative Example 4 | 90.13 (90.22) | 73.55 | 7H |
| Comparative Example 5 | 90.24 (90.31) | 74.57 | 6H |
| Comparative Example 6 | 90.20 (90.30) | 73.06 | 6H |
| Comparative Example 7 | 90.15 (90.28) | 73.79 | 5H |
| Comparative Example 8 | 90.13 (90.27) | 73.39 | 5H |
| Comparative Example 9 | 90.17 (90.28) | 75.36 | 4H |

As shown in Table 5, the PC substrates coated with the coating compositions of Comparative Examples exhibited an excellent transmittance of 90%.

Referring to the contact angles, the PC substrates coated with the coating composition of Comparative Examples exhibited contact angles of 70 to 77°, indicating low hydrophobicity.

Referring to the pencil hardness, the PC substrates coated with the coating compositions of the Comparative Examples exhibited pencil hardness values ranging from 4H to 7H. **In** particular, when the concentration of 3-[tris(trimethylsiloxy)silyl]propyl methacrylate decreased as shown in Comparative Examples 3 and 4, the pencil hardness increased.

That is, as the concentration of CEOS, which is a ladder-type silsesquioxane, increases, the pencil hardness increases, and the CEOS structure has a significant influence on anti-scratch properties.

According to the present invention described above, a non-fluorinated silane compound, a method for preparing the same, and a coating composition comprising the same are provided. Therefore, it is possible to provide an automotive display cover window that exhibits high visibility and excellent anti-fingerprint and anti-scratch properties without using fluorinated compounds.

## Claims

1. A non-fluorinated silane compound represented by Formula 1 below: 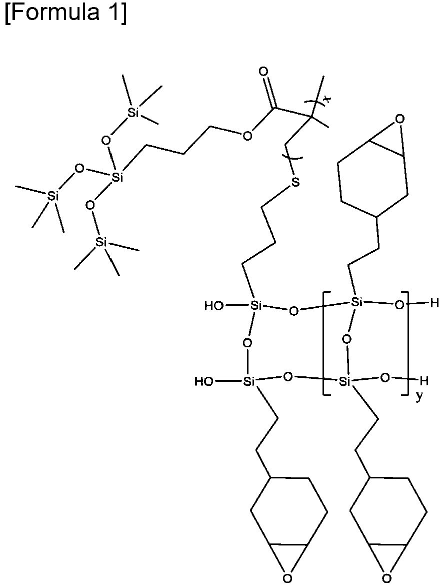 wherein x is 1 to 10, and y is 1 to 20.

2. The compound of claim 1, wherein x is 1 to 5.

3. A method for preparing a non-fluorinated silane compound, comprising the steps of:
preparing a compound represented by Formula 2 below;
forming a first silane-based mixture by mixing the compound represented by Formula 2, 2-(3,4-epoxycyclohexyl)ethyltrimethoxysilane, a catalyst, and a first solvent;
reacting the first silane-based mixture at a first temperature; and
preparing a non-fluorinated silane compound represented by Formula 3 below: 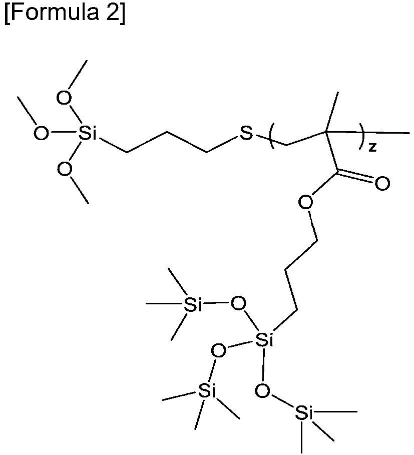
wherein z is 1 to 10, 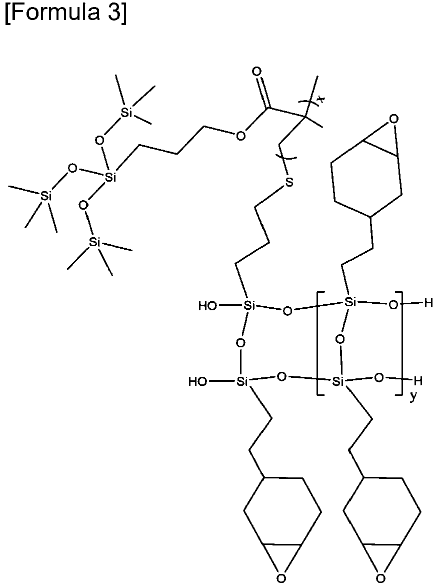
wherein x is 1 to 10, and y is 1 to 20.

4. The method of claim 3, wherein x and z are each from 1 to 5.

5. The method of claim 3, wherein the step of preparing the compound represented by Formula 2 comprises the steps of:
forming a second silane-based mixture by mixing 3-[tris(trimethylsiloxy)silyl]propyl methacrylate, 3-mercaptopropyltrimethoxysilane, a radical initiator, and a second solvent;
reacting the second silane-based mixture at a second temperature under a nitrogen atmosphere;
cooling the second silane-based mixture reacted under the nitrogen atmosphere to room temperature;
collecting the second silane-based mixture cooled to room temperature as an organic layer and subjecting the same to reduced pressure; and
drying the second silane-based mixture subjected to reduced pressure.

6. The method of claim 5, wherein the radical initiator is 2,2'-azobisisobutyronitrile (AIBN).

7. The method of claim 5, wherein the second solvent is tetrahydrofuran (THF).

8. The method of claim 5, wherein the second temperature ranges from 50 °C to 120 °C.

9. The method of claim 3, wherein the first solvent is water.

10. The method of claim 3, wherein the catalyst is ammonium hydroxide.

11. The method of claim 3, wherein the first temperature ranges from 20 °C to 80 °C.

12. A non-fluorinated silane-based organic-inorganic hybrid coating composition comprising:
a non-fluorinated silane compound represented by Formula 4 below;
a photoinitiator; and
a third solvent; 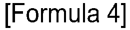 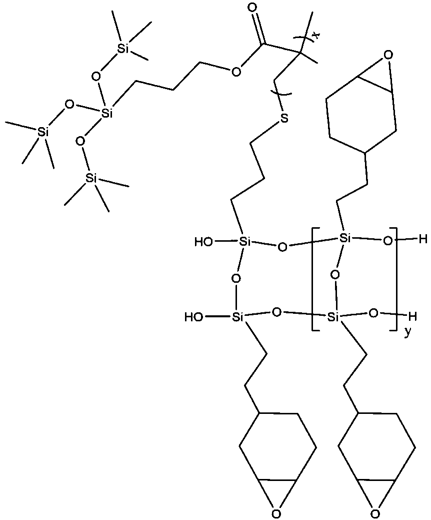
wherein x is 1 to 10, and y is 1 to 20.

13. The composition of claim 12, wherein x is 1 to 5.

14. The composition of claim 12, wherein the photoinitiator is triarylsulfonium hexafluoroantimonate (TSHFA).

15. The composition of claim 12, wherein the third solvent is methyl ethyl ketone.
